# EUROPEAN PATENT SPECIFICATION

(11) **EP 2 893 212 B1**
(45) Date of publication and mention of the grant of the patent: **09.10.2019**
(21) Application number: 13835988.0
(22) Date of filing: 29.08.2013
(51) Int. Cl.: F16F 1/38, B60K 5/12

(54) **ISOLATOR FOR DAMPING VIBRATIONS**
ISOLATOR ZUR DÄMPFUNG VON SCHWINGUNGEN
ISOLANT POUR AMORTIR LES VIBRATIONS

(30) Priority: 06.09.2012 SE 1250997
(43) Date of publication of application: 15.07.2015
(73) Proprietor: Scania CV AB, 151 87 Södertälje (SE)
(72) Inventor: JOHANSSON, Anders, S-125 33 Älvsjö (SE)
(86) International application number: PCT/SE2013/051010
(87) International publication number: WO 2014/038995

(56) References cited:
- FR-A- 1 163 460
- GB-A- 590 765
- GB-A- 777 434
- GB-A- 989 447
- GB-A- 989 447
- JP-A- H08 128 493
- US-A- 2 425 567
- US-A- 4 717 130
- US-A1- 2002 056 953
- US-A1- 2007 164 492

## Description

### TECHNICAL FIELD OF THE INVENTION

The present invention concerns an isolator for damping vibrations, and more specifically a design for reducing vibrations that arise in a vehicle during its forward travel/use. The invention is intended in particular for commercial and heavy vehicles such as goods vehicles. The invention can naturally also be used in other types of vehicles or machines in which vibrations need to be isolated/damped while heavy loads have to be absorbed at the same time. The invention also concerns a vehicle equipped with such an isolator.

### BACKGROUND OF THE ART

Problems in terms of comfort often arise during the operation of heavy commercial vehicles because the vehicle is often equipped with a heavy and powerful drivetrain/engine, and also is often driven over uneven terrain. This results in severe shaking and vibrations that propagate through the vehicle chassis to the cab and elsewhere. The use of various types of rubber bushings or vibration isolators for damping the vibrations and absorbing the relevant loads in various directions is known for the purpose of trying to damp and isolate these vibrations.

Conical and annular rubber elements also belong to the prior art, and their stiffness ratio in various directions can be adapted through the choice of cone angle. Another advantage of a conical damping element is that it can absorb a heavy load even though it exhibits relatively low stiffness and thus a high isolating capacity against vibrations, which is desirable to achieve. Isolators that need to exhibit different stiffnesses in their various radial directions are not normally designed conically, but rather a plurality of isolators is normally used, i.e. a plurality of separate rubber elements that are combined so as to be able to absorb the relevant loads and achieve the desired stiffness properties in different directions, such as axially and radially.

It is therefore desirable to be able to describe and fabricate conical isolators with progressive properties/characteristics so as to be able to reduce undesirable vibrations and increase comfort in vehicle designs as efficiently as possible, and by means of a compact unit. It is also desirable to realize an overload- or motion limit in a single unit so as to prevent damage to vehicle parts and components, and for the overload protection to be situated as close as possible to the component whose vibrations are to be damped.

Numerous attempts to solve these problems have been made.

One example of an isolator that exhibits different stiffnesses in different directions is described in patent US5242146**.** The design consists of a conventional isolator, i.e. a non-conical isolator, wherein the elastic element is designed as an annular body that exhibits different widths in the various radial directions of the isolator. This design cannot absorb heavy loads unless the isolator is designed with a very wide elastic element, which is complicated from a fabrication standpoint, makes the fabrication process more expensive, and produces an unwieldy unit. The described isolator further lacks overload protection and thus the ability to limit major motions in the axial and radial directions.

Patent US20050242481 describes an isolator consisting of a conical annual rubber bushing and a "stopper rubber" in its longitudinal direction. This solution has no stopper element in the transverse direction, and does not enable the isolator to absorb heavy loads in that direction. The primary damping body absorbs the static load axially. This solution makes it necessary to provide two parts with elastic elements, which makes the fabrication process more expensive.

GB777434A relates to a tank vehicle body. The body is encircled forwardly and rearwardly by reinforcing rings welded thereto and is mounted forwardly on bonded rubber to metal bushes, whilst at its rear end it is supported on each side by pairs of links pivoted to the rings and to the chassis so as to allow oscillation of the rear end of the body about an instantaneous center below the chassis.

US20080136071 describes a simple isolator that comprises a bearing part and a motion-limiting part. The isolator rubber is conical and annular, but it is also symmetrical and consequently exhibits the same stiffness and characteristics in the various directions of the isolator.

Low primary stiffness cannot be achieved with this solution either, because the elastic element is locked in on the bump stopper side.

In addition, the isolator lacks an overload element and cannot limit major/more powerful motions in the axial direction. The solution does not offer the freedom to select the stiffness ratio between the primary and secondary parts.

The need thus exists for a new and improved isolator solution that solves the foregoing problems and is simple and thus cost-effective to fabricate and install, but which also eliminates the disadvantages of the prior art.

It is also desirable that the design be compact and occupy as little space as possible in today's densely packed vehicles, while still being reliable, offering maintenance-free and appropriate function and having a long service life.

### SUMMARY OF THE INVENTION

One object of the invention is to solve the foregoing problems and provide an isolator that can, in a simple and efficient way and in a single integrated unit, offer high load tolerance and motion-limiting overload protection that is disposed close to the connected vehicle component, and that can exhibit different stiffnesses in different directions.

An additional object of the invention is that it must be possible to carry out the fabrication, i.e. vulcanization, of the necessary elastic elements in a single fabrication step.

An additional object of the invention is that it must be possible to distribute the total load on the isolator in an optimal and desirable manner between an overload element and an isolator element, so that a greater share of the load and the powerful vibrations is absorbed by an overload element and a lesser share of the vibrations is absorbed by the isolator element, so that the load stress in the joint is minimized.

An additional object of the invention is that it must be possible to design the isolator element with different thicknesses at different locations along its annular body.

An additional object of the invention is that it must be possible to design the isolator element with an oval body.

An additional object of the invention is that it must be possible to design the isolator element with different cone angles, including at different locations on the annular body.

An additional object of the invention is that it must be possible to design the rubber element with a combination of different cone angles and different thicknesses at different locations along the annular body.

An additional object of the invention is that it must be possible to implement the design in previously manufactured vehicles without necessitating extensive modifications of already installed components.

An additional object of the invention is that the isolator must consist of as few parts as possible, and thus be cost-effective to fabricate, install and maintain.

These and further objects and advantages are achieved according to the invention by means of an isolator having the features specified in the characterizing portion of claim 1.

The invention thus generally concerns a device for isolating/damping vibrations, and in particular a design for minimizing/reducing vibrations that arise in a vehicle during its use and forward travel. The invention is preferably intended for commercial and heavy vehicles such as goods vehicles, but can naturally also be used in other types of vehicles and machine installations where it is desirable to damp shaking and vibrations.

The invention is realized by designing an isolator with both a conical elastic element and an overload element, i.e. a so-called bump stopper. Both elements can advantageously be made of rubber. The conical elastic element is essentially annular, but can be asymmetrical in its radial plane and can, for example, be designed ovally/elliptically or with different thicknesses at different locations on the annular body. The isolator can thus exhibit different stiffnesses and load absorbing capacities in its different radial or axial directions. The isolator is also designed as an integrated unit and preferably comprises two parts by means of which a sharing of the total load occurs, for example, between a conical and annular elastic element and an overload element.

The isolator is thus divided into two main parts, a bottom part and an insertion part with a connecting device and, according to the invention, the vulcanization of the elastic element of the bottom part to its inner conical surface and of the elastic element of the overload protection to the upper/outer edge can occur in a single fabrication process.

The total load is thus divided between the overload element and the isolator element, so that the load on the outer and inner bolted joints is minimized. A significant portion of the load across the overload element is absorbed in the delimiting surface between the outer flange of the insertion part and the elastic element vulcanized onto the outer/upper edge of the bottom part.

By designing the conical elastic isolator element so that it is not rotationally symmetric, different stiffnesses can be realized in the different radial directions (or y- and z-directions) of the isolator. This is achieved, for example, by means of thickness variations and/or cone angle variations at various locations on the annular elastic body. The thickness and thus the stiffness at various locations on the elastic element are varied by designing the inner and/or outer surface of the elastic body ovally/elliptically. This results in, for example, the ability to increase the longitudinal stiffness in relation to the vertical stiffness when at least one of the four delimiting surfaces of the elastic element is designed ovally or elliptically.

The disadvantages of the prior art are eliminated by the design according to the invention, and a more suitable, functional and maintenance-free isolator is provided.

The vulcanization process is also simplified in that the elastic elements exhibit a moderate/limited extent in the axial direction of the isolator. The isolator according to the invention can also conceivably be installed in already manufactured goods vehicles, for instance when maintenance is required, by replacing the old rubber bushings with their equivalents according to the invention.

Because of its more efficient vibration damping and better load absorbing ability, the solution according to the invention results in less wear to the vehicle and its components, which reduces the need for maintenance while at the same time reducing comfort problems in the form of vibrations and noise in the vehicle.

Additional features and advantages of the invention are presented in the following more detailed description of the invention and the accompanying drawings and other claims.

### BRIEF LIST OF DRAWINGS

The invention is described in detail below in several preferred exemplary embodiments and with reference to the accompanying drawing figures.
**Figure 1** shows a perspective view of the frame beam of a goods vehicle on which is mounted an isolator according to the invention, which frame beam is intended for the mounting of a heavy vehicle component such as a drivetrain/engine.
**Figure 2** shows an exploded perspective diagram of an isolator according to the invention in which the various parts comprised in the isolator are presented.
**Figure 3** shows, in greater detail, an isolator according to the invention wherein the mounting holes for installing the isolator are shown along with mounting holes for installing a vehicle component for the isolator.
**Figure 4** shows the isolator according to Figure 3, but divided into two parts, a bottom part and an insertion part.
**Figure 5** shows a cross-section through the disassembled isolator.
**Figure 6** shows the same cross-section as in Figure 4, but with the parts of the isolator assembled.
**Figure 7** shows alternatively designed elastic elements, damping bodies. **Fig. 7a** shows a cross-section of a limited portion of the elastic body of the isolator and adjacent portions of the bottom part. **Fig. 7b** shows how the elastic mass of the damping body can be reduced. **Fig. 7c** shows, in lateral section, how the elastic mass of the damping body can be designed ovally/elliptically, and **Fig. 7d** shows a view in plane of an oval/elliptical damping body.
**Figure 8** shows yet another exemplary embodiment of an isolator that is not rotationally symmetric.

### DESCRIPTION OF PREFERRED EMBODIMENTS

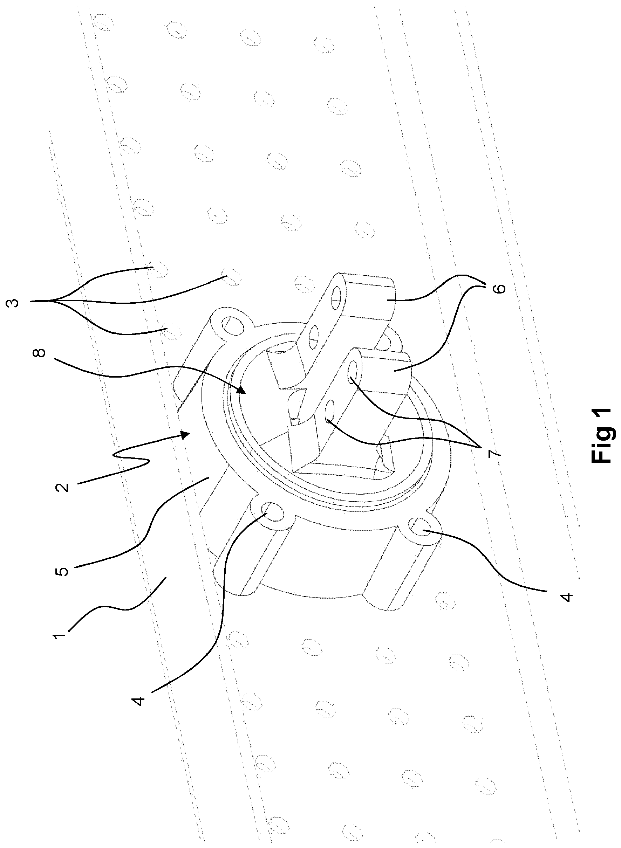

**Figure 1** shows a perspective view of a side frame beam 1 on which is mounted an isolator 2 according to the invention, and which is in turn intended for the mounting of a vibration-generating object, i.e. a heavy vehicle component such as a drivetrain, drive train or the like (not shown). The side frame beam 1 is equipped here with a pattern of holes 3 to which four mounting holes 4 in the bottom part 5 of the isolator are adapted. The isolator 2 is mounted to the side frame beam 1 by means of bolts or the like (not shown). Two projecting brackets 6 provided with bolt holes 7 and comprising a connecting part for, for example, a vehicle component, are arranged in the centrally positioned insertion part 8 of the isolator 2.

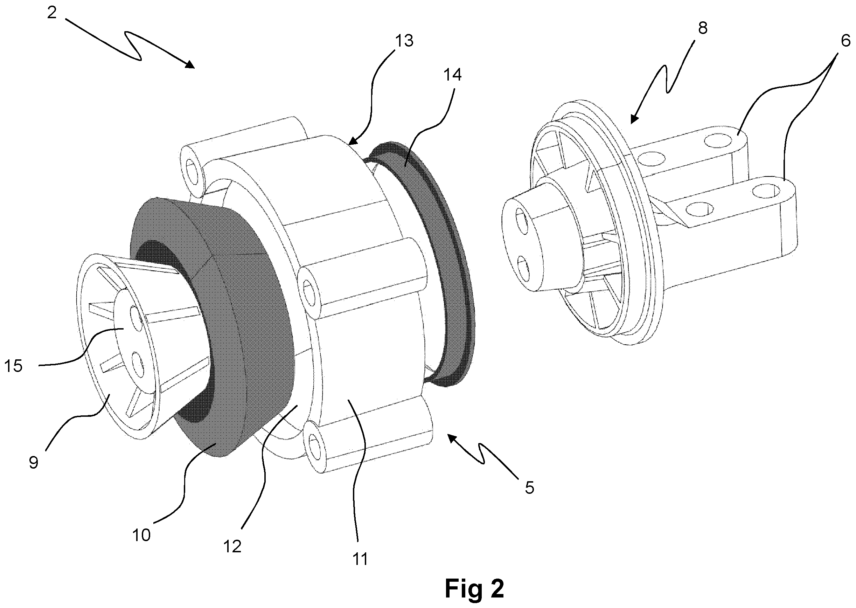

**Figure 2** shows an exploded perspective drawing of an isolator 2 according to the invention in which the various components comprised in the isolator are presented. A cone 9 made of, for example, metal, is arranged so as to be introduced into a conical or annular elastic element (isolator element), which is preferably made of rubber and is in turn arranged inside an outer sleeve 11 with a conical inner surface 12. The upper/outer edge 13 of the sleeve 11 is equipped with an overload element 14, also made of an elastic material such as rubber and, finally, everything is assembled in that an insertion part 8 with connecting brackets 6 is inserted into the interior hollow space of the cone 9 and secured to the bottom 15 of the cone by means of a suitable connector. The isolator 2 is held together thereby as a unit. The bottom part 5, with the cone 9, the isolator element, the sleeve 11 and the overload element 14, is advantageously fabricated as an integrated unit, although each comprised component is shown as a separate part in this figure.

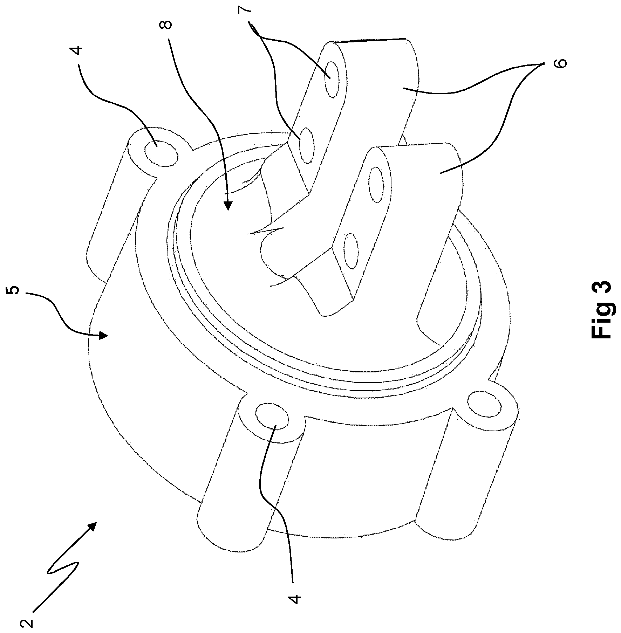

**Figure 3** shows a oblique perspective side view of the isolator 2 according to the invention in which the mounting holes 4 for mounting the isolator 2 on, for example, a side frame beam, are shown more clearly, as are the mounting holes 7 in the brackets 6 of the insertion part 8 for mounting, for example, a vibrating vehicle component. The bottom part 5 and the insertion part 8 here are essentially rotationally symmetric and circularly shaped, and are preferably fabricated, for example die cast, of metal.

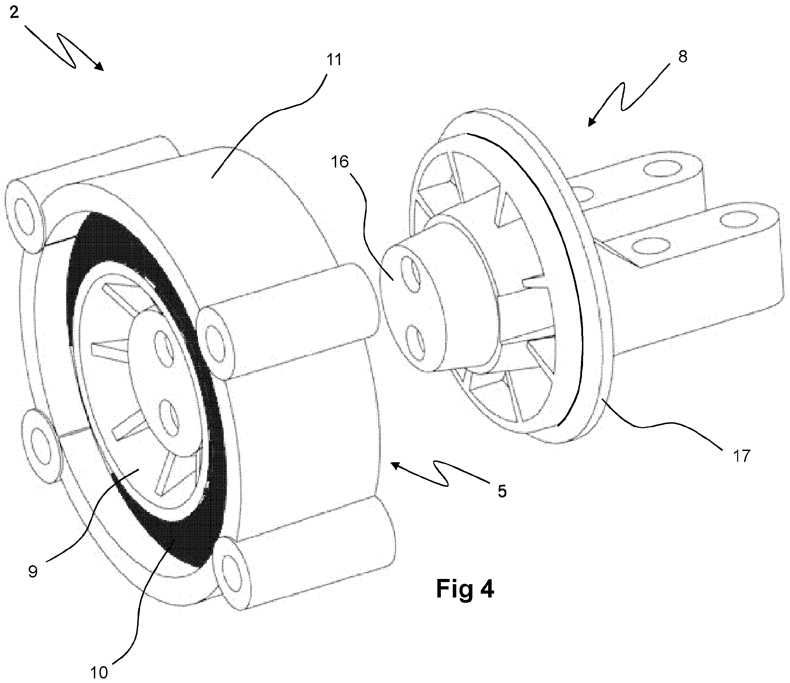

**Figure 4** shows the isolator 2 according to Figure 3, but here separated into only two parts, the bottom part 5 and the insertion part 8, which are assembled by means of a bolt connection or the like. Holes for screws/bolts/rivets are arranged both in the bottom surface 15 of the cone 9 that is fixedly vulcanized in the bottom part and in the inner bottom surface 16 of the insertion part 8. The essentially circular elastic element, i.e. the isolator element, can be seen in the bottom part 5, which element constitutes the main damping body of the isolator 2 and is arranged, preferably fixedly vulcanized, between the outer annular sleeve 11 and the cone 9. The insertion part 8 is also provided with a radial outer flange 17 that constitutes a part of the overload stop of the isolator 2.

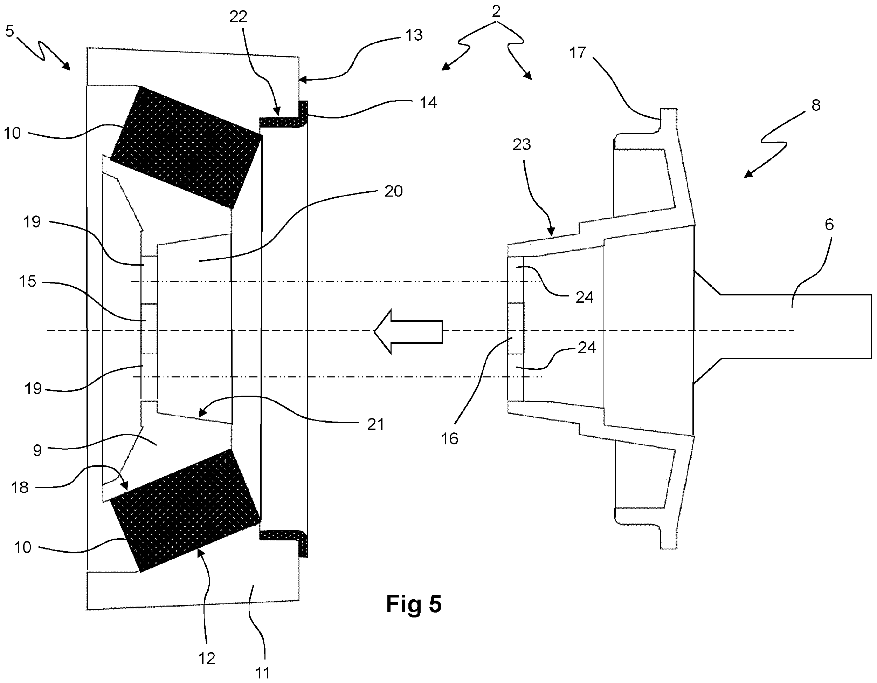

**Figure 5** shows a cross-section through an isolator 2 according to the invention, with the bottom part 5 to the left in the figure and the insertion part 8 to the right. The annular sleeve 11 surrounds the damping body 10 and the centered cone 9. The inside of the sleeve 11 is designed with a conical surface 12 on which the damping body 10, which has a corresponding conical outer surface, is arranged, or to which it is preferably vulcanized. The damping body 10 is also designed with an inner conical surface 18 so as to engage with the outer surface 9 of the cone. The cone 9 is equipped with a bottom part 15 that is provided with, for example, two holes 19, which are intended for bolts, rivets or the like. The cone 9 is also provided with a central recess 20 intended to be able to receive a portion of the insertion part 20. Said recess 20 can also be advantageously designed with a conical surface 21, in part to facilitate the mounting and centering of the insertion part 8 during assembly. A very stiff and strong joint is formed between the parts as a result of a wedge effect.

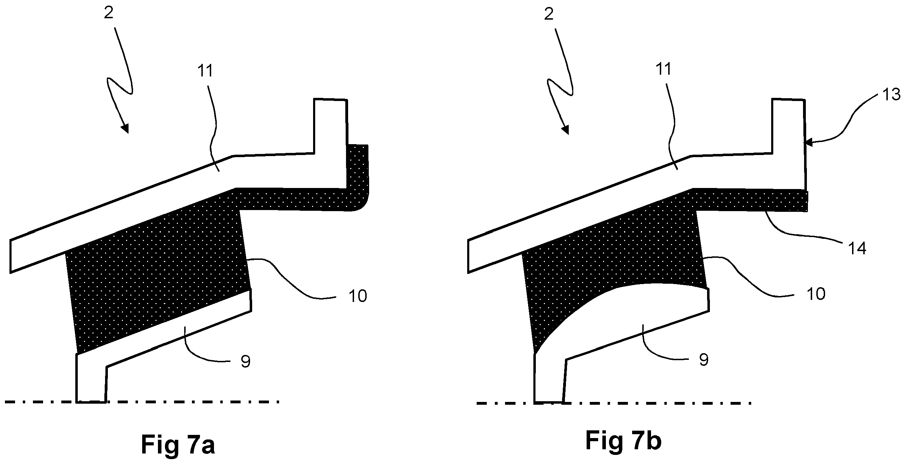

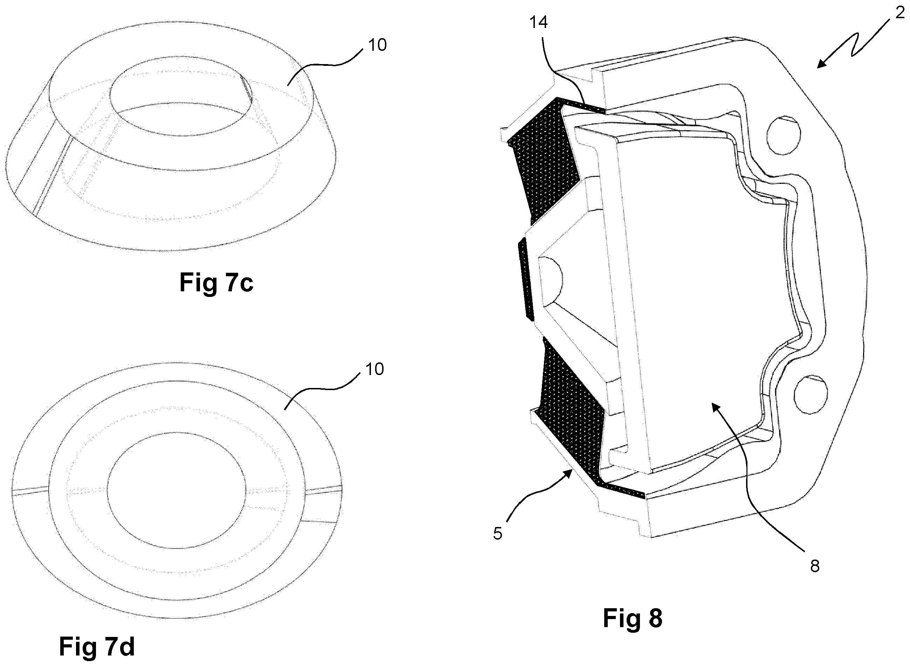

The outer/upper edge 13 of the sleeve 11 constitutes a part of the overload protection of the isolator 2, and there is arranged on said edge 13 an elastic annular element, an overload element 14 or so-called bump stopper, preferably made of rubber and vulcanized on the sleeve 11 in the same fabrication step as the damping body 10. The damping body 10 and the overload element 14 can also be integrated with one another (see Figures 7 and 8). The overload element 14 is advantageously arranged on the edge surface 13 of the sleeve 11 itself.

The insertion part 8 has an essentially circular shape with a somewhat conical outer jacket 23. Mounting holes 24 for, for example, bolts or rivets, are arranged in its bottom surface 16. In the exemplary embodiment shown here, the insertion part 8 is essentially hollow, but it can naturally be designed as a solid body in which threaded bolt holes can be arranged (not shown). The insertion part 8 is provided with a peripherally and radially protruding outer flange 17 that constitutes a part of the overload protection of the isolator 2. The flange 17 is arranged so as to be able, when the isolator 2 is in its assembled state, to move toward the edge surface 13 of the sleeve 11 and the overload element 14 that is arranged thereon in the event that the isolator 2 is subjected to strong vibrations or an overload.

One significant advantage of the present invention is that any overload will be absorbed close to the vehicle component to which the isolator 2 is connected and supports, for example a drivetrain/engine, and that this occurs by means of an inserted unit 8 with brackets 6 and an overload stop in the form of a flange 17 without the need for rubber elements vulcanized thereon. It is also advantageous that the insertion part 8 with the brackets 6 is in direct connection to the damping body 10, and that the overload element 14 is arranged in proximity to the brackets 6, e.g. on the edge surface 13 of the sleeve 11. The isolator 2 can be viewed as being divided into one part that absorbs the major loads, the so-called bump stopper loads, and one part that serves to damp the moderate loads/vibrations to which the isolator 2 is subjected. A compact isolator 2 is thereby achieved that is simple in design but still reliable and functional. The design also entails that the inner joint, i.e. the joint between the inner cone 9 and the insertion part 8, will not be subjected to such heavy shearing or load stresses, and that the outer joint between the bottom part 5 and, for example, the side frame beam 1, is subjected to relatively low stresses as a result of the compact and advantageous design of the components involved.

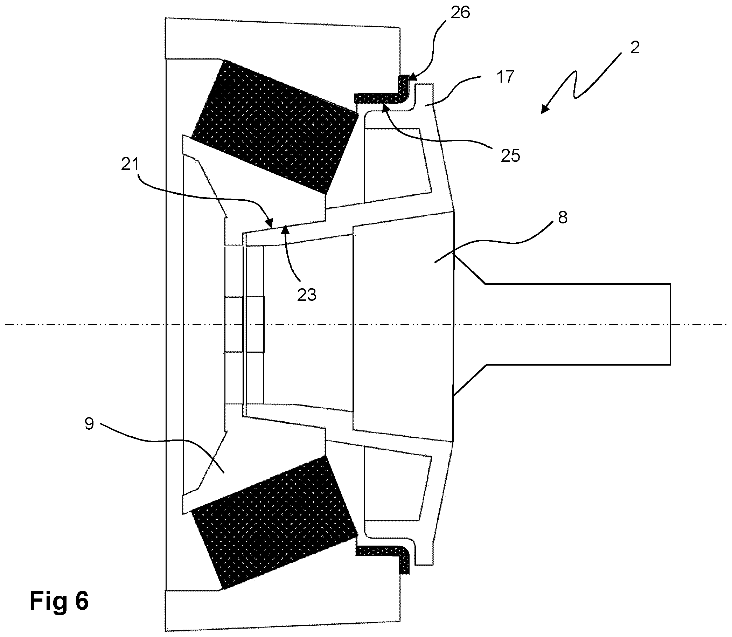

**Figure 6** shows the same cross-section as Figure 4, but with the parts of the isolator 2 assembled (although the actual joint is not shown). The cone 9 and the insertion part 8 are thus securely joined with one another by means of bolts or rivets, or in some other appropriate manner, and the insertion part 8 has been centered in the cone 9 by means of the conical and annual surfaces 21, 23 of the cone 9 and the insertion part 8. In the figure, the isolator is not subjected to an overload either axially or radially, with the result that the flange 17 of the insertion part 8 rests on neither the radial inner surface 25 nor the upper surface 26 of the overload element 14.

**Figure 7a** shown a perspective view of a cross-section through a limited portion of the elastic element of the isolator 2. A portion of the sleeve 11 and of the cone 9 is also shown, and they constitute supports or stiffeners for the elastic element. The sleeve 11 and the cone 9 are advantageously vulcanized to the elastic element. The figure also shows, in greater detail, the symmetrically designed elastic element that is mounted against an equally symmetrically designed cone.

**Fig. 7b** shows another embodiment in which the mass of the elastic element can be reduced either symmetrically along its entire annular extent or asymmetrically in at least one or a plurality of locations along the annular elastic element, for example, in that the cone 9 is designed with thicker material or a welt in the otherwise symmetrical conical surface. The cone 9 and the elastic element thus become asymmetrical, and the isolator 2 will exhibit stiffnesses that differ in various radial directions in proportion to the variations in mass in the various areas of the elastic element. An asymmetrical elastic element can also be realized in other ways, such as by arranging hollow spaces of appropriate size in the elastic element or on its outer surface. This figure also shows a variant of the overload element 14 in which it does not extend over the edge section 13 of the sleeve 11. The axial overload motions can be absorbed in another way (not shown).

**Fig. 7c** shows an oblique side view to illustrate how the mass of the elastic element can be designed ovally/elliptically, with the result that the mass in the various parts of the ring exhibits different stiffness and damping characteristics. The ability of the isolator 2 to absorb loads can be adapted to the relevant desires/needs and requirements in this way.

**Fig. 7d** shows a view in plane of an ovally/elliptically designed elastic element.

**Figure 8** shows a further exemplary embodiment of an isolator 2 wherein the overload element 14 is not rotationally symmetric and the insertion part 8 has been lowered into the bottom part 5. The overload element 14 here is arranged on the inside of the sleeve 11.

The foregoing description is intended primarily to facilitate an understanding of the invention. The invention is thus naturally not limited to the foregoing embodiments, but rather other variants of the invention are possible and conceivable within the framework of the concept of the invention and the protective scope of the claims that follow.

## Claims

1. An isolator (2), preferably intended for damping/reducing vibrations in a vehicle such as a goods vehicle during its use/forward travel, and intended to absorb loads from, for example, a drivetrain, which isolator comprises an overload element (14) and an elastic damping body (10), wherein
- the isolator (2) consists primarily of a bottom part (5) and an insertion part (8), wherein the insertion part (8) is limitedly moveable in relation to the bottom part (5) against the action of the damping body (10),
- the bottom part (5) is arranged so as to be mounted on, for example, a chassis part/side frame beam (1) or the like,
- the insertion part (8) is arranged so as to be mounted on/connected to an object whose vibrations are to be damped/isolated,- the bottom part (5) comprises a cone (9), the damping body (10), the overload element (14) and an outer sleeve (11) having a conical inner surface (12) and an upper/outer edge (13), wherein the damping body (10) is conical or annular and and arranged inside the outer sleeve (11) and wherein the cone (9) is arranged so as to be introduced into the damping body (10),
and
- the overload element (14) is made of an elastic material and is arranged adjacent to the upper/outer edge (13) of the outer sleeve (11), preferably on its inner and/or upper side, and arranged so as to constitute a overload stop for the motions of the insertion part (8) in its radial and/or axial direction,
- the insertion part (8) is inserted into an interior hollow space of the cone (9) and secured to a bottom (15) of the cone by means of a suitable connector, and thereby the isolator is held together as a unit, c**haracterized in that**
- both the overload element (14) and the damping body (10) are fixedly vulcanized to the outer sleeve (11); and
the insertion part (8) comprises connecting brackets (6).

2. An isolator (2) according to claim 1,
**characterized in that**
- the damping body (10) and the overload element (14) consist of an elastic material, preferably a rubber material.

3. An isolator (2) according to claim 1 or 2,
**characterized in that**
- the damping body (10) is essentially rotationally symmetric.

4. An isolator (2) according to any of the preceding claims,
**characterized in that**
- the isolator (2) consists of an integrated and compact unit that is arranged so as to absorb, damp/isolate, both overloads and vibrations.

5. An isolator (2) according to any of the preceding claims,
**characterized in that**
- the insertion part (8) is provided with a peripherally/radially extending flange (17) constituting a part of the overload stop.

6. An isolator (2) according to claim 5,
**characterized in that**
- the overload element (14) is arranged adjacent to/between the outer/upper edge (13) of the sleeve (11) and the flange (17) of the insertion part (8) when the isolator (2) is in its assembled state.

7. An isolator (2) according to any of the preceding claims,
**characterized in that**
- the overload stop is arranged in proximity to the vibration-generating object connected to the insertion part (8.

8. An isolator (2) according to any of the preceding claims,
**characterized in that**
- the overload element (14) and the damping body (10) constitute an integrated and coherent part fabricated in a single fabrication step.

9. An isolator (2) according to any of the preceding claims,
**characterized in that**
- the damping body (10) is rotationally asymmetric and exhibits different stiffnesses in its various radial directions.

10. A vehicle comprising an isolator (2) according to any of claims 1-9.

## Patentansprüche

1. Isolator (2), vorzugsweise vorgesehen zum Dämpfen/Verringern von Schwingungen in einem Fahrzeug wie etwa einem Güterfahrzeug während seiner Benutzung/Vorwärtsbewegung, und dazu vorgesehen, Kräfte von beispielsweise einem Antriebsstrang zu absorbieren, wobei der Isolator ein Überlastelement (14) und einen elastischen Dämpfungskörper (10) aufweist, wobei
- der Isolator (2) hauptsächlich aus einem Unterteil (5) und einem Einführungsteil (8) besteht, wobei das Einführungsteil (8) bezüglich des Unterteils (5) gegen die Wirkung des Dämpfungskörpers (10) begrenzt bewegbar ist,
- das Unterteil (5) dazu angeordnet ist, beispielsweise an einem Karosserieteil/seitlichen Rahmenträger (1) oder ähnlichem befestigt zu werden,
- das Einführungsteil (8) dazu angeordnet ist, auf einem Gegenstand angebracht/mit ihm verbunden zu werden, dessen Schwingungen gedämpft/abgeblockt werden sollen,
- das Unterteil (5) einen Kegel (9), den Dämpfungskörper (10), das Überlastelement (14) und eine äußere Hülse (11) mit einer konischen Innenfläche (12) und einem oberen/äußeren Rand (13) umfasst, wobei der Dämpfungskörper (10) konisch oder ringförmig ist und innerhalb der äußeren Hülse (11) angeordnet ist, und wobei der Kegel (9) dazu angeordnet ist, in den Dämpfungskörper (10) eingeführt zu werden, und
- das Überlastelement (14) aus einem elastischen Material besteht und neben dem oberen/äußeren Rand (13) der äußeren Hülse (11) angeordnet ist, vorzugsweise auf dessen innerer und/oder oberen Seite, und dazu angeordnet ist, einen Überlastanschlag für die Bewegungen des Einführungsteils (8) in dessen radialer und/oder axialer Richtung zu bilden,
- das Einführungsteil (8) in einen inneren Hohlraum des Kegels (9) eingeführt und an einem Boden (15) des Kegels mittels eines geeigneten Verbinders befestigt ist und dadurch der Isolator als eine Einheit zusammengehalten ist,
**dadurch gekennzeichnet, dass**
- sowohl das Überlastelement (14) als auch der Dämpfungskörper (10) fest an die äußere Hülse (11) vulkanisiert sind und das Einführungsteil (8) Verbindungshalterungen (6) aufweist.

2. Isolator (2) nach Anspruch 1,
**dadurch gekennzeichnet, dass**
- der Dämpfungskörper (10) und das Überlastelement (14) aus einem elastischen Material bestehen, vorzugsweise einem Gummimaterial.

3. Isolator (2) nach Anspruch 1 oder 2,
**dadurch gekennzeichnet, dass**
- der Dämpfungskörper (10) im Wesentlichen rotationssymmetrisch ist.

4. Isolator (2) nach einem der vorhergehenden Ansprüche,
**dadurch gekennzeichnet, dass**
- der Isolator (2) aus einer integralen und kompakten Einheit besteht, die dazu angeordnet ist, sowohl Überlasten als auch Schwingungen zu absorbieren, dämpfen/isolieren.

5. Isolator (2) nach einem der vorhergehenden Ansprüche,
**dadurch gekennzeichnet, dass**
- das Einführungsteil (8) mit einem umfangsseitig/radial verlaufenden Flansch (17) versehen ist, der einen Teil des Überlastanschlags darstellt.

6. Isolator (2) nach Anspruch 5,
**dadurch gekennzeichnet, dass**
- das Überlastelement (14) neben/zwischen dem äußeren/oberen Rand (13) der Hülse (11) und dem Flansch (17) des Einführungsteils (8) angeordnet ist, wenn der Isolator (2) sich in seinem zusammengebauten Zustand befindet.

7. Isolator (2) nach einem der vorhergehenden Ansprüche,
**dadurch gekennzeichnet, dass**
- der Überlastanschlag in Nachbarschaft zu dem schwingungserzeugenden Gegenstand angeordnet ist, welcher mit dem Einführungsteil (8) verbunden ist.

8. Isolator (2) nach einem der vorhergehenden Ansprüche,
**dadurch gekennzeichnet, dass**
- das Überlastelement (14) und der Dämpfungskörper (10) ein integrales und zusammenhängendes Teil bilden, welches in einem einzigen Herstellungsschritt erzeugt ist.

9. Isolator (2) nach einem der vorhergehenden Ansprüche,
**dadurch gekennzeichnet, dass**
- der Dämpfungskörper (10) rotationsasymmetrisch ist und in seinen verschiedenen Radialrichtungen unterschiedliche Steifigkeiten hat.

10. Fahrzeug mit einem Isolator (2) nach einem der Ansprüche 1 bis 9.

## Revendications

1. Isolateur (2), de préférence destiné à l'amortissement/la réduction de vibrations dans un véhicule, tel qu'un véhicule de marchandises durant son utilisation/déplacement avant, et destiné à absorber des charges de, par exemple, une transmission, lequel isolateur comprend un élément de surcharge (14) et un corps d'amortissement élastique (10), dans lequel
- l'isolateur (2) est constitué principalement d'une partie inférieure (5) et d'une pièce d'insertion (8), dans laquelle la pièce d'insertion (8) est amovible de façon limitée par rapport à la partie inférieure (5) contre l'action du corps d'amortissement (10),
- la partie inférieure (5) est disposée de sorte à être montée sur, par exemple, une pièce de châssis/montant de châssis latéral (1) ou similaire,
- la pièce d'insertion (8) est disposée de sorte à être montée sur/connecté à un objet dont les vibrations doivent être amorties/isolées,
- la partie inférieure (5) comprend un cône (9), le corps d'amortissement (10), l'élément de surcharge (14) et un manchon extérieur (11) ayant une surface intérieure conique (12) et un bord supérieur/extérieur (13), dans laquelle le corps d'amortissement (10) est conique ou annulaire et disposé à l'intérieur du manchon extérieur (11) et dans lequel le cône (9) est disposé de sorte à être introduit dans le corps d'amortissement (10), et
- l'élément de surcharge (14) est constitué d'un matériau élastique et est disposé à côté du bord supérieur/extérieur (13) du manchon extérieur (11), de préférence sur son côté intérieur et/ou supérieur, et disposé de sorte à constituer un arrêt de surcharge pour les mouvements de la pièce d'insertion (8) dans sa direction radiale et/ou axiale,
- la pièce d'insertion (8)
est insérée dans un espace creux intérieur du cône (9) et fixé à un fond (15) du cône au moyen d'un connecteur approprié, et donc l'isolateur est maintenu ensemble en tant qu'unité,
**caractérisé en ce que**
- l'élément de surcharge (14) et le corps d'amortissement (10) sont solidement vulcanisés sur le manchon extérieur (11) ; et
la pièce d'insertion (8) comprend des supports de fixation (6) .

2. Isolateur (2) selon la revendication 1,
**caractérisé en ce que**
- le corps d'amortissement (10) et l'élément de surcharge (14) sont constitués d'un matériau élastique, de préférence un matériau en caoutchouc.

3. Isolateur (2) selon la revendication 1 ou 2,
**caractérisé en ce que**
- le corps d'amortissement (10) est essentiellement symétrique de manière rotative.

4. Isolateur (2) selon l'une quelconque des revendications précédentes,
**caractérisé en ce que**
- l'isolateur (2) est constitué d'une unité intégrée et compacte qui est disposée de sorte à absorber, amortir/isoler, à la fois les surcharges et les vibrations.

5. Isolateur (2) selon l'une quelconque des revendications précédentes,
**caractérisé en ce que**
- la pièce d'insertion (8) est fournie avec une bride d'extension périphérique/radiale (17) constituant une partie de l'arrêt de surcharge.

6. Isolateur (2) selon la revendication 5,
**caractérisé en ce que**
- l'élément de surcharge (14) est disposé à côté de/entre le bord extérieur/supérieur (13) du manchon (11) et de la bride (17) de la pièce d'insertion (8) lorsque l'isolateur (2) est dans son état assemblé.

7. Isolateur (2) selon l'une quelconque des revendications précédentes,
**caractérisé en ce que**
l'arrêt de surcharge est disposé à proximité de l'objet de génération de vibrations connecté à la pièce d'insertion (8) .

8. Isolateur (2) selon l'une quelconque des revendications précédentes,
**caractérisé en ce que**
- l'élément de surcharge (14) et le corps d'amortissement (10) constituent une pièce intégrée et cohérente fabriquée en une seule étape de fabrication.

9. Isolateur (2) selon l'une quelconque des revendications précédentes,
**caractérisé en ce que**
- le corps d'amortissement (10) est asymétrique de manière rotative et présente différentes densités dans ses diverses directions radiales.

10. Véhicule comprenant un isolateur (2) selon l'une quelconque des revendications 1-9.
